(19) Europäisches Patentamt
European Patent Office
Office européen des brevets

(11) EP 1 432 741 B1

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(21) Anmeldenummer: **02772040.8**

(22) Anmeldetag: **02.09.2002**

(51) Int Cl.:
***H01M 8/1023*** *(2016.01)* ***H01M 8/1025*** *(2016.01)*
***H01M 8/1027*** *(2016.01)* ***H01M 8/103*** *(2016.01)*
***C08J 5/22*** *(2006.01)* ***C08F 8/04*** *(2006.01)*
***C08C 19/02*** *(2006.01)* ***H01M 8/1032*** *(2016.01)*
***H01M 8/1039*** *(2016.01)* ***H01M 8/1072*** *(2016.01)*
***H01M 6/18*** *(2006.01)*

(86) Internationale Anmeldenummer:
**PCT/DE2002/003260**

(87) Internationale Veröffentlichungsnummer:
**WO 2003/022892 (20.03.2003 Gazette 2003/12)**

(54) **SULFINATGRUPPEN ENTHALTENDE POLYMERE UND VERFAHREN ZU IHRER HERSTELLUNG**

POLYMERS CONTAINING SULFONITE GROUPS AND METHOD FOR THE PRODUCTION THEREOF

POLYMERES CONTENANT DES GROUPES SULFINATE ET PROCEDES DE FABRICATION DE CES COMPOSES

(84) Benannte Vertragsstaaten:
**AT BE BG CH CY CZ DE DK EE ES FI FR GB GR IE IT LI LU MC NL PT SE SK TR**

(30) Priorität: **01.09.2001 DE 10142573**
**28.02.2002 DE 10209784**

(43) Veröffentlichungstag der Anmeldung:
**30.06.2004 Patentblatt 2004/27**

(60) Teilanmeldung:
**15003651.5**

(73) Patentinhaber:
- **HÄRING, Thomas**
**70619 Stuttgart (DE)**
- **Universität Stuttgart**
**Institut für Chemische Verfahrenstechnik**
**70199 Stuttgart (DE)**

(72) Erfinder:
- **HÄRING, Thomas**
**70619 Stuttgart (DE)**
- **KERRES, Jochen**
**73760 Ostfildern (DE)**
- **ZHANG, Wei**
**70569 Stuttgart (DE)**

(56) Entgegenhaltungen:
**EP-A- 0 053 455** **WO-A-94/03503**
**WO-A-99/38897** **DE-A- 3 717 964**
**FR-A- 2 276 087** **GB-A- 885 721**
**GB-A- 1 604 173**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 432 741 B1

## Beschreibung

Aus der Literatur ist bekannt, dass bei Polymeren, die Sulfinatgruppen $SO_2Li$ enthalten, die Sulfinatgruppen durch Zugabe von Di- oder Oligohalogenalkanen unter Alkylierung der Sulfinatgruppe zur Sulfongruppe vernetzt werden können[1]. Diese Vernetzungsmethode kann dazu verwendet werden, Ionomermembranen zu vernetzen, um die Membranquellung zu verringern, was zu einer besseren mechanischen und thermischen Stabilität der Membranen im jeweiligen Membranprozess (beispielsweise Elektrodialyse, Diffusionsdialyse, Membranbrennstoffzellen ($H_2$-Membranbrennstoffzellen, Direktmethanol-Brennstoffzellen)) führt. Man kann zwei verschiedene Typen von dergestalt vernetzten Ionomermembranmembranen herstellen:

1) Das sulfonierte Polymer wird zusammen mit dem sulfinierten Polymer in einem geeigneten, meist dipolar-aprotischen Lösungsmittel aufgelöst, und ggf. wird ein Di- oder Oligohalogenvernetzer zugegeben, beispielsweise 1,4-Diiodbutan. Während der Lösungsmittelabdampfung findet die Vernetzungsreaktion statt[2].

2) Es wird ein Polymer, das sowohl Sulfinat- als auch Sulfonatgruppen enthält (beispielsweise hergestellt durch partielle Oxidation des polymeren Sulfinats mit NaOCl, $KMnO_4$, $H_2O_2$ etc.), in einem geeigneten dipolar-aprotischen Lösungsmittel aufgelöst, und ggf. wird ein Di- oder Oligohalogenvemetzer zugegeben, beispielsweise 1,4-Diiodbutan. Während der Lösungsmittelabdampfung findet die Vernetzungsreaktion statt[3]. Bislang sind aus der Literatur jedoch nur sulfinierte Polymere bekannt, die hergestellt werden aus der Reaktion von metallorganisch modifizierten Polymeren (beispielsweise lithiiertem Polysulfon aus der Reaktion von Polysulfon mit Butyl- oder Phenyllithium) mit Schwefeldioxid)[4],[5]. Es können jedoch nicht alle Polymere mit metallorganischen Reagenzien behandelt werden, da die metallorganischen Reagenzien mit funktionellen Gruppen der Polymere reagieren und diese damit in ihren Eigenschaften extrem verschlechtern können. Beispielsweise reagieren metallorganische Reagenzien mit der Carbonylgruppe, so dass beispielsweise die Carbonylgruppen in der Hauptkette enthaltenden Hochleistungsthermoplaste der Polyetherketon-Familie (Polyetherketon PEK Victrex®, Polyetheretherketon PEEK Victrex®, Polyetheretherketonketon PEEKK oder Polyetherketonetherketonketon (PEKEKK Ultrapek®) nicht via Lithiierung sulfiniert werden können. Für die Beinführung der Sulfinatgruppen muss also bei diesen Polymeren ein anderer Weg gefunden werden. Es wäre wünschenswert, sulfinierte Polyetherketone zur Verfügung zu haben, da diese Polymere dann auch vernetzt werden könnten, und dies um so mehr, als dass die Polyetherketone thermisch und mechanisch stabiler als beispielsweise Polysulfone oder Polyphenylenether sind und deshalb beispielsweise vernetzte Ionomermembranen aus diesen Polymeren bessere Stabilitäten in (Elektro)membranprozessen aufweisen dürften.

[1] "Vernetzung von modifizierten Engineering Thermoplasten"
J. Kerres, W. Cui, W. Schnurnberger.Deutsches Patent 196 22 337.7 (Anmeldung vom 4. 6.1996), Deutsches Patentamt (1997) "Reticulation de Materiaux Thermoplastiques Industriels Modifies"
J. Kerres, W. Cui, W. Schnurnberger:Französisches Patent F 97 06706 vom 30.05.1997 "Cross-Linking of Modified Engineering Thermoplastics"
J. Kerres, W. Cui, W. Schnurnberger:US-Patent 6,221,923; erteilt am 24.4.2001
[2] "Development and Characterization of Crosslinked Ionomer Membranes Based Upon Sulfinated and Sulfonated PSU. 2. Crosslinked PSU Blend Membranes By Alkylation of Sulfinate Groups With Dihalogenoalkanes."Jochen Kerres, Wei Cui, Martin JungingerJ. Memb. Sci. 139, 227-241 (1998)
[3] "New sulfonated engineering polymers via the metalation route. 2. Sulfinated-Sulfonated Poly(ethersulfone) PSU Udel® and Its Crosslinking."J. Kerres, W. Zhang, W. CuiJ. Polym. Sci.: Part A: Polym. Chem. 36, 1441-1448 (1998)
[4] "Aromatic Polysulfone Compounds and their Manufacture"
M. D. Guiver, O. KutowyUS 4,999,415 (1991)

Aus der Literatur ist bekannt, dass niedermolekulare Sulfochloride durch Reduktion mit Zn-Staub, Eisen-Staub, Natriumsulfit, Hydrazin, $H_2S$, $LiAlH_4$, Triethylaluminium, Ethylaluminium-Sesquichlorid zu Sulfinaten oxidiert werden können[6],[7]. Dabei führt vor allem die Reduktion mit Zn-Staub[8] und mit $LiAlH_4$[9] zu guten Ausbeuten. Es wurde nun überraschend gefunden, dass Polymere, welche nichtionische Sulfonatgruppenderivate, beispielsweise die Sulfochloridgruppe $-SO_2Cl$ enthalten (polymere Sulfochloride sind leicht zugänglich durch Reaktion der Sulfonsäuregruppe mit Thionylchlorid, Phosphoroxytrichlorid, Phosphorpentachlorid oder durch Reaktion von lithiierten Polymeren mit Sulfurylchlorid), mit geeigneten Reduktionsmitteln oder mit Gemischen geeigneter Reduktionsmittel in Lösung oder in Suspension in hoher Ausbeute und ohne Vernetzung zu Polymeren umgesetzt werden können, bei denen entweder die Sulfochloridgruppen entweder vollständig oder partiell, je nach Reduktionsmittelart und -menge und oder sonstigen Reaktionsbedingungen (z. B. Konzentration, Temperatur), zu Sulfinatgruppen umgesetzt werden können. Dabei ist vor allem die Tatsache, dass während der Reduktion keine Vernetzung des Polymers als Nebenreaktion stattfindet, bemerkenswert und deshalb überraschend, da beispielsweise von Sulfinsäuren bekannt ist, dass diese unter Disproportionierung miteinander reagieren können[10]. Es war insbesondere überraschend, dass die Reaktion der polymeren Sulfochloride mit $LiAlH_4$ bei Temperaturen von -20 bis -60°C ohne Vernetzung und mit hoher Ausbeute ablief, da bei dieser

Reaktion lewissaure Zwischenstufen auftreten, die die Vernetzung der gebildeten Sulfinatgruppen katalysieren könnten[9].

[5] "Aromatische Polysulfonderivate und Verfahren zu ihrer Herstellung" M. D. Guiver, O. Kutowy, J. W. ApSimon Patentanmeldung-Offenlegungsschrift DE 36 36 854 A1 (1987)

[6] "Syntheses of sulfinic acids"Uri Zoller, in "The Chemistry of Sulphinic Acids, Esters and Their Derivatives", ed. by S. Patai, John Wiley and Sons, 1990, New York, S. 187f

[7] "VIII. Reductions of Sulfonyl Derivatives"S. Oae, in "Organic Sulfur Chemistry: Structure and Mechanism", ed. by J. T. Doi, CRC Press, Inc., Boca Raton, 1991, S. 334f

[8] "Sodium p-Toluenesulfinate"F. C. Whitmore, F. H. Hamilton, in "Organic Syntheses", Coll. Vol. I, ed by H. Gilman, 2nd ed., John Wiley and Sons, New York, 1956

[9] "Lithium Aluminium Hydride Reduction of Certain Sulfonic Acid Derivatives"L. Field, F. A. Grunwald J. Org. Chem. 16, 946-953 (1951)

[10] "Development and Characterization of Crosslinked Ionomer Membranes Based Upon Sulfinated and Sulfonated PSU. 1. Crosslinked PSU Blend Membranes By Disproportionation of Sulfinic Acid Groups."Jochen Kerres, Wei Cui, Ralf Disson, Wolfgang Neubrand J. Memb. Sci. 139, 211-225 (1998)

Es war weiter überraschend, dass bei der Reduktion von polymeren Sulfochloriden mit wässrigen Natriumsulfitlösungen oder anderen schwefelhaltigen Reduktionsmitteln wie Natriumdithionit, Natriumthiosulfat oder Gemischen dieser Reduktionsmittel die Reaktion so gesteuert werden kann, dass nur ein Teil der Sulfochloridgruppen zu Sulfinatgruppen umgesetzt wird, und die restlichen Sulfochloridgruppen bei der Reaktion nicht zu Sulfonatgruppen verseift werden, sondern erhalten bleiben. Dies ist dann von Bedeutung, wenn die Sulfinatgruppen der sowohl Sulfochlorid- als auch Sulfinatgruppen enthaltenden Polymere durch S-Alkylierung alkyliert werden. Beispiele für Alkylierungsreaktionen sind:

- kovalente Vernetzung mit Di- oder Oligohalogenverbindungen oder anderen di- oder oligofunktionellen Alkylierungsmitteln
  oder/und
- Reaktion mit monofunktionellen Alkylierungsmitteln

Offenbar verläuft die Sulfinat-S-Alkylierungsreaktion mit größerer Ausbeute, wenn im Polymer statt geladenen Sulfonsäuresalzgruppen Sulfochloridgruppen vorhanden sind. Der Grund hierfür ist vermutlich, dass ungeladene Sulfochloridgruppen besser als Sulfonatsalzgruppen von den Lösungsmitteln solvatisiert werden, welche üblicherweise für Sulfinatgruppen enthaltende Polymere verwendet werden (dipolar-aprotische Lösungsmittel wie N-Methylpyrrolidinon NMP, N,N-Dimethylacetamid DMAc, N,N-Dimethylformamid DMF, Dimethylsulfoxid DMSO oder Sulfolan). Bessere Solvatisierung führt zu besserer Löslichkeit sowohl des sulfochlorierten Polymers als auch des sulfinierten Polymers (Ioneneffekt: wenn Ionenkonzentration und damit Ionenstärke der die verschiedenen Polymere enthaltenden Lösung kleiner ist, wird auch das sulfinierte Polymer besser gelöst) und damit zu höherer Reaktivität der (des) die Sulfinatgruppen enthaltenden Polymere (Polymers) mit den Alkylierungsmitteln.

Mit dem erfindungsgemäßen Verfahren wird eine große Anzahl erfindungsgemäßer polymerer Sulfinate zugänglich - eigentlich kann jede polymere Sulfonsäure nach Umwandlung in das Sulfohalogenid oder ein anderes nichtionisches Sulfonsäurederivat zum jeweiligen polymeren oder Sulfinat umgewandelt werden. Es werden damit insbesondere auch sulfinierte Polymere zugänglich, die auf keinem anderen Weg sulfiniert werden können, wie z. B. Polymere, die Carbonylgruppen in der Haupt- oder in der Seitenkette enthalten. Insbesondere die Hochleistungs-Thermoplaste aus der Familie der Polyetherketone, die nicht lithiierbar sind, können auf die erfindungsgemäße Weise sulfiniert werden.

Damit werden auch neue kovalent vernetzte Polymere oder Polymer(blend)membranen für verschiedenste Anwendungen zugänglich, beispielsweise für Membranverfahren wie Membranbrennstoffzellen, Elektrodialyse (ggf. mit Bipolaren Membranen), Pervaporation, Gastrennung, Diffusionsdialyse, Umkehrosmose, Perstraktion etc.

Der besondere Vorteil des erfindungsgemäßen Reduktionsverfahrens besteht darin, dass es möglich ist, die Sulfonylgruppen durch einen Unterschuss an Reduktionsmittel nur partiell zu reduzieren, so dass Polymere erhalten werden, die sowohl Sulfinat- als auch Sulfonylgruppen auf dem gleichen Backbone aufweisen. Die Sulfonylgruppen können in einem weiteren Schritt sauer, alkalisch und/oder neutral zur jeweiligen Sulfonatgruppe hydrolysiert werden, so dass ein Polymer entsteht, das sowohl Sulfonat- als auch Sulfinatgruppen enthält, das dann in einem weiteren Schritt zu kovalent vernetzten protonenleitfähigen Polymermembranen umgesetzt werden kann, wobei die Sulfinatgruppe nach üblichen Verfahren vernetzt werden kann[1].

Eine weitere Möglichkeit zur Darstellung von nur teilweise zu Sulfinat reduzierten polymeren Sulfohalogenidgruppen wird ermöglicht durch die Verwendung von Polymeren, die zwei oder drei unterschiedliche Sulfohalogenidgruppen auf demselben Polymerbackbone tragen. Besonders bevorzugt sind dabei Kombinationen aus Sulfochloriden, Sulfobromiden und/oder Sulfofluoriden. Ganz besonders bevorzugt sind Kombinationen aus Sulfochlorid- und Sulfobromidgruppen im selben Polymermolekül. Die Verhältnisse der Sulfohalogenidgruppen können jeden beliebigen Wert untereinander annehmen. In Abhängigkeit vom verwendeten Reduktionsmittel und dem verwendetem Lösungmittel

zeigen die entsprechenden Sulfohalogenide eine unterschiedliche Tendenz zur Reduktion.

Ganz besonders bevorzugt ist wie oben schon erwähnt die Darstellung von Polymeren die Sulfohalogenid und Sulfinatgruppen auf dem gleichen Backbone aufweisen. Gefolgt von einer Weiterverarbeitung zu einer Membran, die kovalent vernetzt ist, wie sie im Beispiel 5 exemplarisch an dem Polymer PEEK aufgezeigt wird. Nach der Vernetzung wird die verbleibende Sulfohalogenid-Gruppe wahlweise in Wasser, einer verdünnten Säure und/oder alkalisch hydrolisiert und in die Sulfonsäure- bzw. Sulfonsäuresalzgruppe überführt.

Das Verhältnis von Sulfochlorid zu Sulfinatgruppen im Endprodukt kann jeden beliebigen Wert annehmen. Er ist einzig und allein abhängig von den gewählten Reduktionsbedingungen. Dazu gehören

a) die Dauer der Reduktion: sie liegt zwischen wenigen Sekunden bis zu 60 Stunden, bevorzugt sind 10 bis 30 Stunden

b) die Temperatur der Reduktionsreaktion: Sie liegt je nach Medium zwischen -60°C und 100°C. Bei Verwendung von Natriumsulfit als Reduktionsmittel liegt sie zwischen 50°C und 100°C

c) die verwendeten Lösungsmittel: bevorzugt sind Wasser und aprotische Lösungsmittel, insbesondere aprotisch-polare (wie NMP, DMAc, DMSO und THF) und beliebige Mischungen der Lösungsmittel untereinander.

Wenn die Reduktionsreaktion der erfindungsgemäßen sulfinierten Polymere durchgeführt wird, können der Lösung des sulfinierten Polymers in einem geeigneten Lösungsmittel außer dem di- oder oligofunktionellen Vernetzer (beispielsweise 1,4-Diiodbutan) gleichzeitig andere Alkylierungsmittel zugesetzt werden, die gleichzeitig mit der Vernetzungsreaktion Sulfinatgruppen alkylieren. Dadurch können vernetzte Membranen und andere Formkörper erzeugt werden, deren Eigenschaften durch die zusätzlich eingeführten funktionellen Gruppen modifiziert sind. Enthalten die anderen Alkylierungsmittel beispielsweise Säurefunktionen, kann eine Kationenleitfähigkeit, insbesondere eine Protonenleitfähigkeit, der vernetzten Membranen und anderen Polymerformkörper generiert werden. Eine Alkylierung mit basische Gruppen enthaltenden Alkylierungsmitteln führt zu basisch modifizierten Membranen.

Die Hauptketten der erfindungsgemäßen Polymere sind beliebig wählbar, es werden jedoch als Hauptketten folgende Polymere bevorzugt:

- Polyolefine wie Polyethylen, Polypropylen, Polyisobutylen, Polynorbornen, Polymethylpenten, Polyisopren, Poly(1,4-butadien), Poly(1,2-butadien)
- Styrol(co)polymere wie Polystyrol, Poly(methylstyrol), Poly($\alpha$,$\beta$,$\beta$-trifluorstyrol), Poly(pentafluorostyrol)
- perfluorierten Ionomere wie Nafion® oder der $SO_2$Hal-Vorstufe von Nafion® (Hal=F, Cl, Br, I), Dow®-Membrane, GoreSelect®-Membrane
- sulfoniertes PVDF und/oder die $SO_2$Hal-Vorstufe, wobei Hal für Fluor, Chlor, Brom oder Jod steht
- (Het)arylhauptkettenpolymere wie:
- Polyetherketone wie Polyetherketon PEK Victrex®, Polyetheretherketon PEEK Victrex®, Polyetheretherketonketon PEEKK, Polyetherketonetherketonketon PEKEKK Ultrapek®
- Polyethersulfone wie Polysulfon Udel®, Polyphenylsulfon Radel R®, Polyetherethersulfon Radel A®, Polyethersulfon PES Victrex®
- Poly(benz)imidazole wie PBI Celazol® und andere den (Benz)imidazol-Baustein enthaltende Oligomere und Polymere, wobei die (Benz)imidazolgruppe in der Hauptkette oder in der Polymerseitenkette vorhanden sein kann
- Polyphenylenether wie z. B. Poly(2,6-dimethyloxyphenylen), Poly(2,6-diphenyloxyphenylen)
- Polyphenylensulfid und Copolymere
- Poly(1,4-phenylene) oder Poly(1,3 phenylene), die in der Seitengruppe ggf. mit Benzoyl-, Naphtoyl- oder o-Phenyloxy-1,4-Benzoylgruppen, m-Phenyloxy-1,4-Benzoylgruppen oder p-Phenyloxy-1,4-Benzoylgruppen modifiziert sein können.
- Poly(benzoxazole) und Copolymere
- Poly(benzthiazole) und Copolymere
- Poly(phtalazinone) und Copolymere
- Polyanilin und Copolymere

In den nachfolgenden Reaktionsgleichungen (1) und (2) ist exemplarische für sulfoniertes PEEK (Polyetheretherketon) die Reduktion zum Sulfinat dargestellt:

$$\text{sPEEK} + SOCl_2 \xrightarrow{\text{DMF}} \text{PEEK-}SO_2Cl + SO_2 + HCl \qquad (1)$$

$$PEEK\text{-}SO_2Cl + Na_2SO_3 + H_2O \longrightarrow PEEK\text{-}SO_2H + NaCl + NaHSO_4 \qquad (2)$$

Im nachfolgenden Ablaufschema ist exemplarisch die teilweise Reduzierung von sulfoniertem PEEK über das entsprechende Sulfochlorid zum Sulfinat dargestellt.

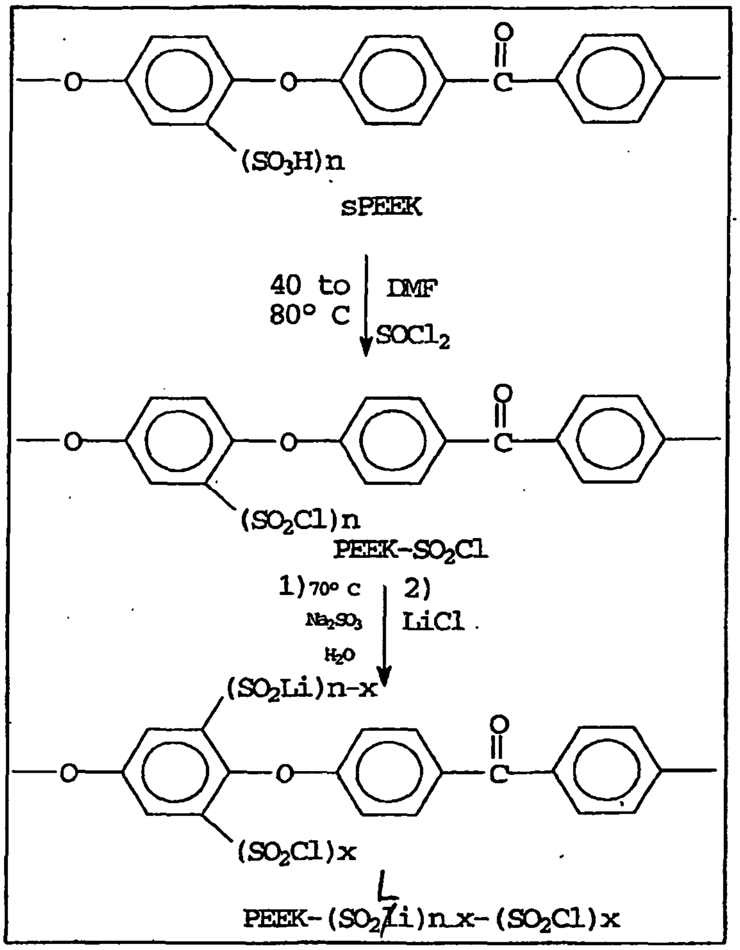


Da polymere Sulfinate sehr instabil sind wird die entstehende Natriumsalzform in das wesentlich stabilere Lithiumsalz durch Kationenaustausch übergeführt.

Nach dem erfindungsgemäßen Verfahren ist ganz besonders bevorzugt die teilweise oder vollständige Reduktion von sulfochloriertem Polysulfon (PSU) und sulfochloriertem PEEK.

Die durch kovalente Vernetzung entstehenden Membranen können in Brennstoffzellen, insbesondere in Membranbrennstoffzellen, abhängig vom Grundpolymerbackbone, in einem Temperaturbereich von -50°C bis +280°C eingesetzt werden.

BEISPIELE

*1. Herstellung von sulfoniertem Polysulfon PSU Udel® durch Reduktion von PSU-Sulfochlorid mit Lithiumaluminiumhydrid*

10,83 g sulfochloriertes PSU Udel® werden in 300 ml Tetrahydrofuran (THF) gelöst. Die Lösung wird unter Argon-Schutzgas auf -65°C heruntergekühlt. Danach werden zur Lösung innerhalb von 2 Stunden 13 ml 0,013molare Lithiumaluminiumhydridlösung in THF durch einen Tropftrichter in die Polymerlösung getropft. Der Beginn der Reduktionsreaktion wird angezeigt durch Wasserstoffentwicklung. Nachdem die Wasserstoffentwicklung beendet ist, was nach etwa 1 Stunde der Fall ist, wird in die Reaktionsmischung eine Mischung von 60 ml 10%iger LiOH-Lösung und 120 ml Ethanol eingespritzt. Danach wird die Reaktionsmischung in 2,51 i-Propanol ausgefällt und abfiltriert. Der Filterrückstand

wird bei 60°C im Trockenschrank unter 50 mbar Unterdruck getrocknet. Die Bildung des PSU-Sulfinats wird nachgewiesen durch ein IR-Spektrum des Produkts. Die Sulfinatbande bei 970 $cm^{-1}$ ist deutlich erkennbar (Abb. 1, IR-Spektren von PSU-$SO_2Cl$ (Spektrum 1), von PSU-$SO_2Li$, hergestellt durch Reaktion von PSU-Li mit $SO_2$ (Spektrum 2), und von PSU-$SO_2Li$, hergestellt durch Reduktion von PSU-$SO_2Cl$ mit $LiAlH_4$ (Spektrum 3).

*2. Herstellung von sulfiniertem Poly(etheretherketon) PEEK durch Reduction von PEEK-$SO_2Cl$ mit wässriger Natrium-sulfit-Lösung*

Material:

7,6g PEEK-$SO_2Cl$(0,02mol)
126g (1mol) $Na_2SO_3$
500ml $H_2O$

$$PEEK\text{-}SO_2Cl+Na_2SO_3+H_2O \rightarrow PEEK\text{-}SO_2Na+NaCl+NaHSO_4$$

PEEK$SO_2Cl$ wird zu 500 ml einer 2M 500ml $Na_2SO_3$-Lösung addiert und bei 70°C für 20 Stunden gerührt. Danach wird auf 100°C erhitzt und 10 min lang bei dieser Temperatur reagieren gelassen. Danach filtriert man das weisse Polymer ab. Dann wird das Polymer in 500 ml einer 10%igen LiOH-Lösung gerührt, um die Sulfinatgruppen in die Li-Form zu bringen. Danach wird filtriert und der Niederschlag bis zur neutralen Reaktion des Waschwassers gewaschen. Danach wird das Polymer bei Raumtemperatur bis zur Gewichtskonstanz unter Vakuum getrocknet. Danach wird das Polymer in Wasser suspendiert und dialysiert. Die dialysierte Polymerlösung wird entwässert und das Polymer bei Raumtemperatur und Vakuum bis zur Gewichtskonstanz getrocknet.

*IR*: Die Bande bei 970 $cm^{-1}$ der Sulfinatgruppe -$SO_2Li$ ist deutlich detektierbar (Abb. 2)

Das sulfinierte PEEK ist leicht in NMP und DMSO löslich. Wird zu einer NMP-Lösung des Polymers 1,4-Dijodbutan gegeben, findet innerhalb 5 min. eine Gelierung und damit Vernetzung des Polymers statt. Abb. 4 zeigt ein $^1H$-NMR-Spektrum des sulfinierten PEEK. Elementaranalyse: 1,0Gruppen ersetzt

| | C | H | S | Cl |
|---|---|---|---|---|
| Theo. | 63,69 | 3,07 | 8,94 | 0 |
| Exp. | 52,52 | 3,71 | 6,60 | 1,95 |

Elementaranalyse nach Dialyse des Produktpolymers (Cl in Polymer liegt immer noch als Sulfochlorid vor):

| | C | H | S | Cl |
|---|---|---|---|---|
| Theo. | 63,69 | 3,07 | 8,94 | 0 |
| Exp. | 53,26 | 4,09 | 6,89 | 2,01 |

Elementaranalyse des Ausgangsprodukts sulfochloriertes PEEK:

| | C | H | S | Cl |
|---|---|---|---|---|
| Theo. | 59,06 | 2,85 | 8,29 | 9,07 |
| Exp. | 57,43 | 3,07 | 8,32 | 9,54 |

Elementaranalyse mit berechneten Werten, wenn 25% der funktionellen Gruppen als Sulfochlorid und 75% der funktionellen Gruppen als Sulfinat vorliegen würden:

Molekularmasse 397g/mol. ($C_{19}H_{11}O_7S_1Cl_{0,25}Li_{0,75}$)

| | C | H | S | Cl |
|---|---|---|---|---|
| Theo. | 57,31 | 2,77 | 8,06 | 2,20 |
| Exp. | 52,52 | 3,71 | 6,60 | 1,95 |

*3. Herstellung von teilweise sulfiniertem Poly(etheretherketon) PEEK durch Reduktion von PEEK-$SO_2$Cl mit wässriger Natriumsulfit-Lösung*

Material:

20 g PEEK-$SO_2$Cl(0,053 mol)
300ml 2 molare wässrige Lösung von $Na_2SO_3$

$$\text{PEEK-SO}_2\text{Cl} + \text{Na}_2\text{SO}_3 + \text{H}_2\text{O} \rightarrow \text{PEEK-SO}_2\text{Na} + \text{NaCl} + \text{NaHSO}_4$$

PEEK$SO_2$Cl wird zu einer 2M 300ml $Na_2SO_3$-Lösung addiert und bei 70°C für 20 Stunden gerührt. Danach filtriert man das weisse Polymer ab. Dann wird das Polymer in 500 ml einer 10%igen LiOH-Lösung gerührt, um die Sulfinatgruppen in die Li-Form zu bringen. Danach wird filtriert und der Niederschlag bis zur neutralen Reaktion des Waschwassers gewaschen. Danach wird das Polymer bei Raumtemperatur bis zur Gewichtskonstanz unter Vakuum getrocknet. Danach wird das Polymer in Wasser suspendiert und dialysiert. Die dialysierte Polymerlösung wird entwässert und das Polymer bei Raumtemperatur und Vakuum bis zur Gewichtskonstanz getrocknet.
Elementaranalysenergebnisse nach Dialyse:

| | C | H | S | Cl |
|---|---|---|---|---|
| Theo. | 63,69 | 3,07 | 8,94 | 0 |
| Exp. | 56,21 | 4,00 | 6,75 | 2,55 |

Das Elementaranalysenergebnis entspricht etwa 0,28 verbleibenden Sulfochloridgruppen und 0,72 erhaltenen Sulfinatgruppen pro Wiederholungseinheit. Eine Redoxtitration des sulfinierten Polymers mit einem Uberschuss an NaOCl und Rücktitration mit Natriumthiosulfat ergibt etwa 0,58 Sulfinatgruppen pro Wiederholungseinheit.

Daten der Titration:

$C_{Na2S2O3}$ =0,1N
$C_{NaOCl}$=0,4962mmol/g
1,259g PEEK-$SO_2$Li
11,265g NaOCl(5,5897mmol)
$V_{Na2S2O3}$=70,626ml
$G_{NaOCl}$=70,626*0,1/2=3,5313mmol
$G_{SO2Li}$=5,5897-3,5313=2,0584mmol
40°C, 4 Stunden. 150ml $H_2O$.
$IEC_{PEEK-SO2Li}$=2,0584/1,259=1,63 mmol/g (ungefähr 0,58 $SO_2$Li-Gruppen pro Wiederholungseinheit).

Das oxidierte Polymer wird mit 0,1N NaOH titriert. Es ergibt sich eine IEC von 2,52 meq $SO_3$H-Gruppen pro g Polymer. Das Ausgangspolymer sulfoniertes PEEK (vor Sulfochloridbildung) hatte eine IEC von 2,7 meq/g.

*4. Herstellung von teilweise reduziertem PEEK-S02Cl*

Material:

7,6g PEEK-$SO_2Cl$(0,02mol)
126g (1mol) $Na_2SO_3$
500ml $H_2O$

$$\text{PEEK-}SO_2Cl + Na_2SO_3 + H_2O \rightarrow ClO_2S\text{-PEEK-}SO_2Na + NaCl + NaHSO_4$$

PEEK$SO_2$Cl wird zu 300 ml einer 2 molaren wässrigen $Na_2SO_3$-Lösung addiert und bei 70°C für 10 Stunden gerührt. Danach filtriert man das weisse Polymer ab. Dann wird das Polymer in 500 ml einer 10%igen LiOH-Lösung gerührt, um die Sulfinatgruppen in die Li-Form zu bringen. Danach wird filtriert und der Niederschlag bis zur neutralen Reaktion des Waschwassers gewaschen. Danach wird das Polymer bei Raumtemperatur bis zur Gewichtskonstanz unter Vakuum getrocknet. Danach wird das Polymer in Wasser suspendiert und dialysiert Die dialysierte Polymerlösung wird entwässert und das Polymer bei Raumtemperatur und Vakuum bis zur Gewichtskonstanz getrocknet. Das erhaltene Produkt enthält sowohl Sulfinat als Sulfochloridgruppen.

*5. Herstellung von kovalent vernetzten Membranen unter Verwendung von sulfiniertem PEEK*

Das sulfinierte PEEK aus Beispiel 3 (0,72 Sulfinatgruppen und 0,28 Sulfochloridgruppen pro Wiederholungseinheit) wird gegebenenfalls zusammen mit sulfoniertem PEK-$SO_3$Li ($IEC_{sPEK}$=1,8 meq/g) zusammen in NMP zu einer 15%igen Lösung aufgelöst. Der Vernetzer 1,4-Diiodbutan wird zur Lösung zugegeben und danach eine Membran gezogen. Man dampft das Lösungsmittel im Vakuum-Trockenschrank ab (zuerst 100°C/800 mbar, dann 120°C/50 mbar), und entnimmt die Membran dem Trockenschrank Nach Abkühlung wird unter Wasser abgelöst, in 7% NaOH bei 60°C für 1 Tag, gefolgt von Wasser bei 90°C für 1 Tag, dann in 10% $H_2SO_4$ bei 90°C für 1 Tag, und schließlich in Wasser bei 90°C für 1 Tag nachbehandelt.

Membranherstellung:

| Membran [Nr.] | Sulfiniertes PEEK [g]* | Sulfoniertes PEK [g]** | NMP [g] | 1,4-Diiodbutan [ml] |
|---|---|---|---|---|
| PEEK-1 | 1 | 2 | 20 | 0,23 |
| PEEK-2 | 1 | 1 | 20 | 0,24 |
| PEEK-3 | 1 | - | 10 | 0,1 |

* Sulfiniertes PEEK aus Beispiel 3
** Sulfoniertes PEEK mit IEC=1,8 meq $SO_3$Li/g Polymer

Charakterisierungsergebnisse der Membranen:

| Membran [Nr.] | $IEC_{exp.}$ [meq/g] | $IEC_{theo}$ [meq/g] | Wasseraufnahme [%] | $R_{sp}$ [$\Omega$*cm] * | Extraktionsrückstand [%] ** |
|---|---|---|---|---|---|
| PEEK-1 | 1,61 | 1,53 | 76,2 | 4,2 | - |
| PEEK-2 | 1,4 | 1,4 | 85,9 | 5,13 | 39,4 |
| PEEK-3 | 1,01 | 1,0 | 18,1 | 22,1 | 100 |

* gemessen in 0,5N HCl, Impedanz bei Raumtemperatur (25°C)
** gelagert in 90°C heißem DMAc, Rückstand abzentrifugiert, mit MeOH und Wasser gewaschen und im Vakuum bei erhöhter T getrocknet

Aus Abb. 6 ersieht man, dass die Quellung der kovalent vernetzten Membran aus PEEK-$SO_2$Li-$SO_2$Cl (PEEK, das sowohl Sulfochlorid als auch Sulfinat-Gruppen enthält.) selbst bei einer Temperatur von 90°C nur 33% beträgt, und dies bei hoher Protonenleit-fähigkeit von 22,1 Ω*cm. Dies ist ein bemerkenswertes Ergebnis, das für diese Membran sehr gute Perspektiven bei der Anwendung in Membranbrennstoffzellen bei T>80°C erwarten lässt.

Nachfolgend im Schema die Bildung der kovalent-vernetzten Membran aus partiell reduziertem PEEK-S02Cl:

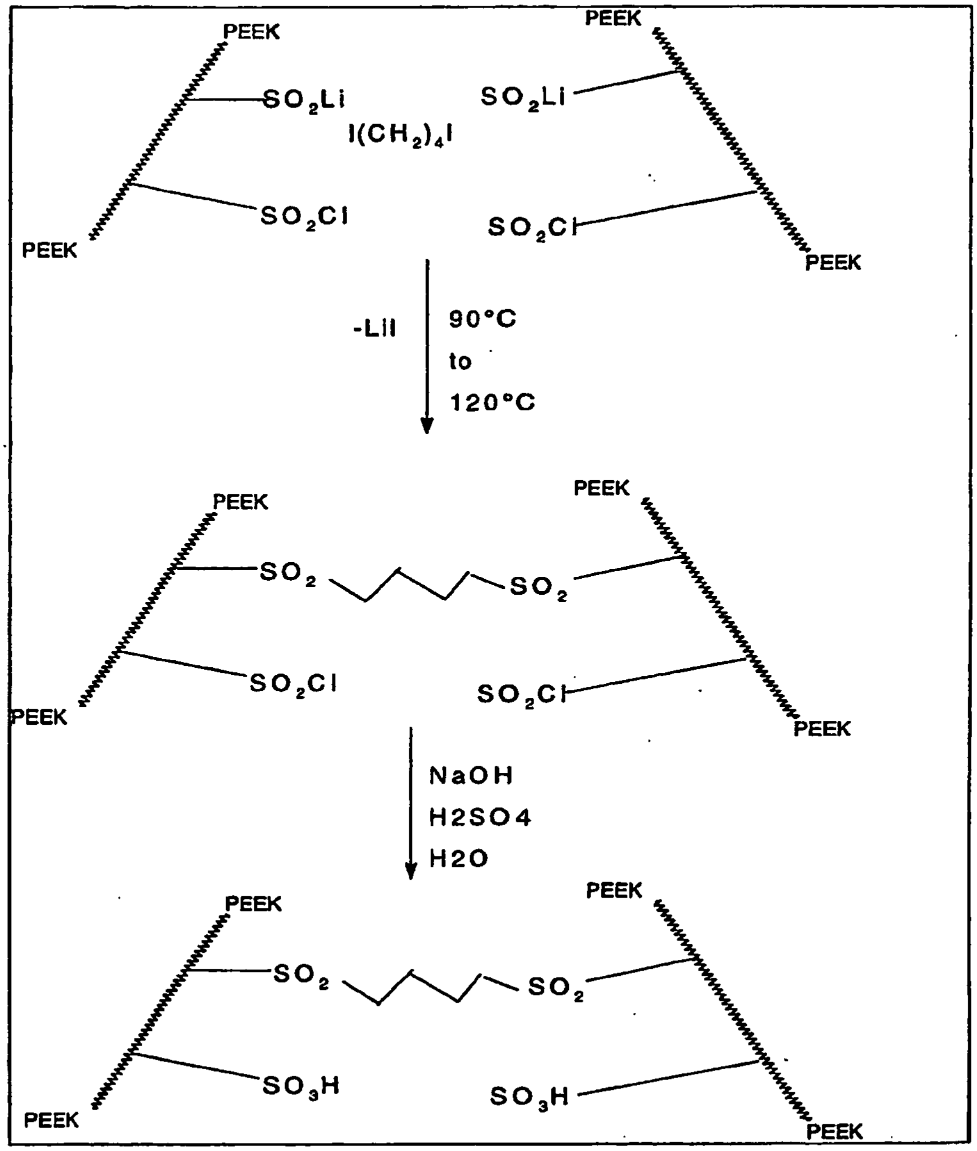


Auf den nachfolgenden Seiten werden noch einmal die im Rahmen der vorliegenden Erfindung besonders bevorzugten Polymere mit ihren Strukturen aufgezeigt. Die aufgezeigten Polymere sind mit Sulfohalogenidgruppen, vor der Reduktion substituiert. Der Substitutionsgrad je wiederkehrender Einheit ist von Polymer zu Polymer unterschiedlich und kann Werte von Null bis zu 10 Sulfohalogenidgruppen je Wiederholungseinheit annehmen. Bevorzugt sind Werte von 1-5, insbesondere von 2-4 Sulfohalogenidgruppen. Es können 100% der Sulfohalogenidgruppen zu Sulfinatgruppen reduziert werden, bevorzugt ist jedoch eine teilweise Reduktion der Sulfohalogenidgruppen zu Sulfinatgruppen. Bevorzugt ist dabei ein Wert von 30 bis 60% der eingesetzten Sulfohalogenidgruppen.

Bei der Darstellung von kovalenten Membranen aus Polymeren die sowohl Sulfohalogenid-als auch Sulfochloridgruppen tragen, sind Membranen bevorzugt die nach der Hydrolyse eine Ionenaustauscherkapazität (IEC) von 0,8 bis 2,2 besitzten insbesondere sind Membranen mit einem IEC von 1,0 bis 1,8 bevorzugt.

Zu den im Rahmen der vorliegenden Erfindung besonders bevorzugten Polymeren mit wiederkehrenden Einheiten der allgemeinen Formel (1) gehören Homo- und Copolymere, beispielsweise statistische Copolymere, wie ®Victrex 720 P und ®Astrel an. Ganz besonders bevorzugte Polymere sind Polyarylether, Polyarylthioether, Polysulfone, Polyetherketone, Poylpyrrole, Polythiophene, Polyazole, Polyphenylene, Polyphenylenvinylene, Polyaniline, Polyazulene,

Polycarbazole, Polypyrene, Polyindophenine und Polyvinylpyridine, insbesondere:

Polyarylether:

Polyphenylenoxid

**Polyphenylenoxid**

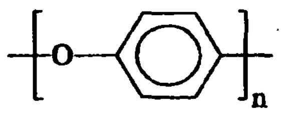

(1A-1)

Polyarylthioether:

Polyphenylensulfid

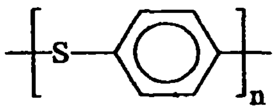

(1B-1)

Polysulfone:

®Victrex 200 P

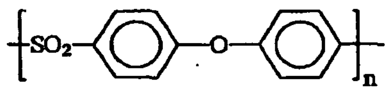

(1C-1)

®Victrex 720 P

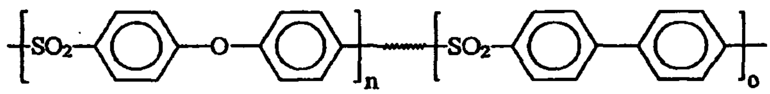

(1I-1)

mit n > o
®Radel

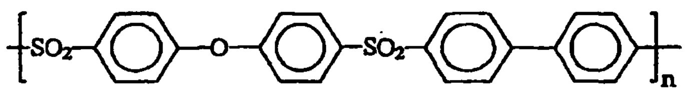

(1G-1)

®Radel R

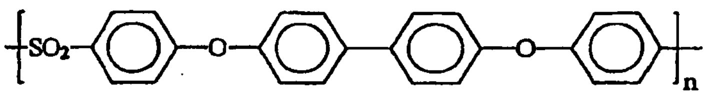

(1E-1)

®Victrex HTA

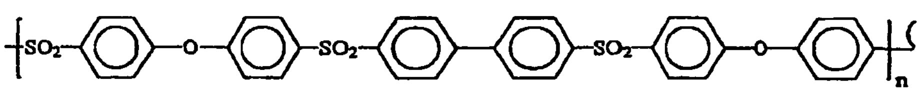

(1H-1)

®Astrel

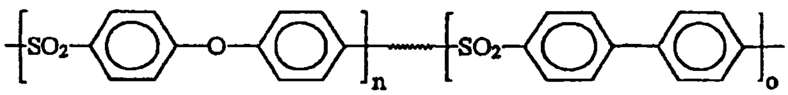

(1I-2)

mit n < o

®Udel

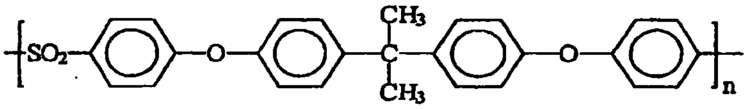

(1F-1)

Polyetherketone:

PEK

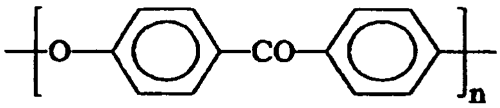

(1J-1)

PEKK

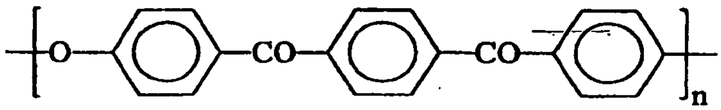

(1K-1)

PEKEKK

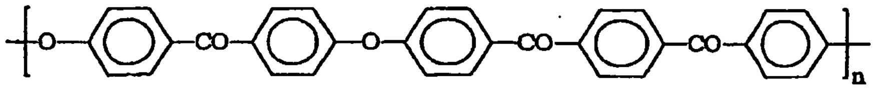

(1L-1)

PEEK

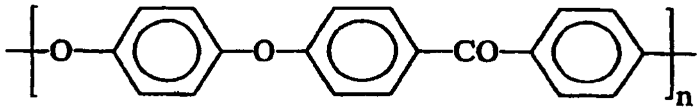

(1M-1)

PEEKK

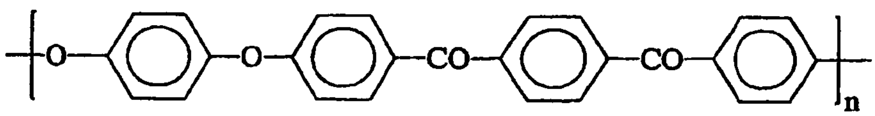

(1N-1)

Polypyrrole:

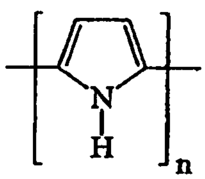

(1P-1)

Polythiophene:

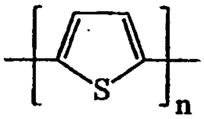

(1P-2)

Polyazole:

Polybenzimidazol

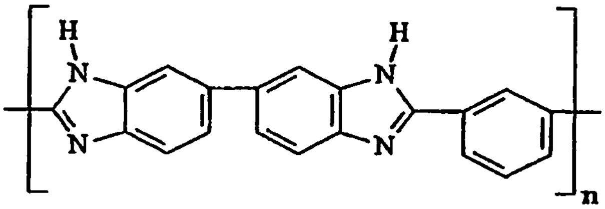

(1S-1)

Polyphenylene:

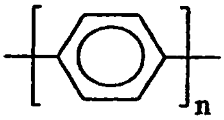

(1P-3)

Polyphenylenvinylen:

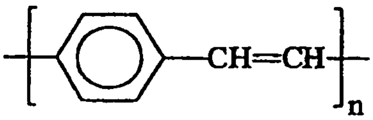

(1Q-1)

Polyanilin:

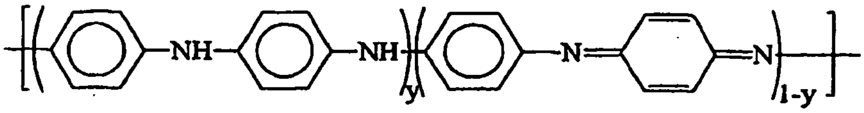

(1O-1)

Polyazulen:

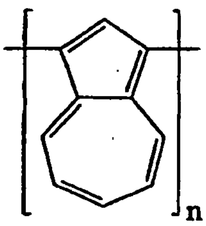

(1P-4)

Polycarbazol:

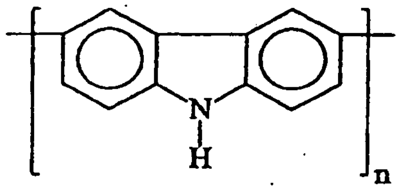

(1P-5)

Polypyren:

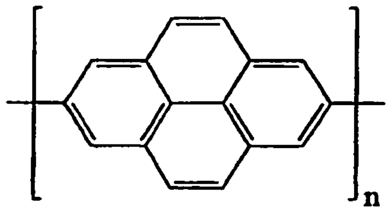

(1P-6)

Polyindophenine:

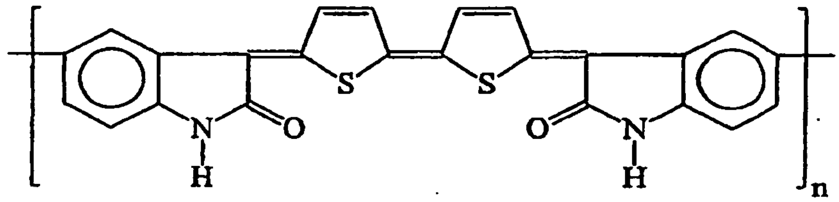

(1P-7)

Polyvinylpyridin:

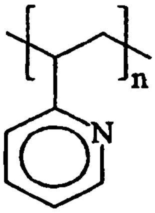

(1R-1)

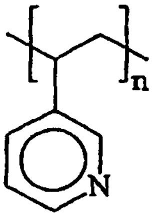

(1R-2)

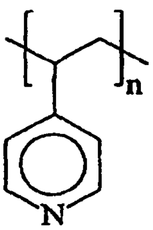

(1R-3)

Erfindungsgemäß ganz besonders bevorzugt werden vernetzte Polymere mit wiederkehrenden Einheiten der allgemeinen Formel (1A-1), (1B-1), (1C-1), (1I-1), (1G-1), (1E-1), (1H-1), (1I-1), (1F-1), (1J-1), (1K-1), (1L-1), (1M-1) und/oder (1N-1).

Im Rahmen der vorliegenden Erfindung bezeichnet n die Anzahl der wiederkehrenden Einheiten entlang einer Makromolekülkette des vernetzten Polymers. Diese Anzahl der wiederkehrende Einheiten der allgemeinen Formel (1) entlang einer Makromolekülkette des vernetzten Polymers ist vorzugsweise eine ganze Zahl größer gleich 10, insbesondere größer gleich 100. Vorzugsweise ist die Anzahl der wiederkehrende Einheiten der allgemeinen Formel (1A), (1B), (1C), (1D), (1E), (1F), (1G), (1H), (1I), (1J), (1K), (1L), (IM), (1N), (1O), (1P), (1Q), (1R), (IS) und/oder (1T) entlang einer Makromolekülkette des vernetzten Polymers eine ganze Zahl größer gleich 10, insbesondere größer gleich 100.

In einer besonders bevorzugten Ausführungsform der vorliegenden Erfindung ist das Zahlenmittel des Molekulargewichts der Makromolekülkette größer als 25.000 g/mol, zweckmäßigerweise größer 50.000 g/mol, insbesondere größer 100.000 g/mol.

ZITIERTE NICHTPATENTLITERATUR

[2] "Development and Characterization of Crosslinked Ionomer Membranes Based Upon Sulfinated and Sulfonated PSU. 2. Crosslinked PSU Blend Membranes By Alkylation of Sulfinate Groups With Dihalogenoalkanes."Jochen Kerres, Wei Cui, Martin JungingerJ. Memb. Sci. 139,227-241 (1998)

[3] "New sulfonated engineering polymers via the metalation route. 2. Sulfinated-Sulfonated Poly(ethersulfone) PSU Udel® and Its Crosslinking."J. Kerres, W. Zhang, W. CuiJ. Polym. Sci.: Part A: Polym. Chem. 36, 1441-1448 (1998)

[6] "Syntheses of sulfinic acids"Uri Zoller, in "The Chemistry of Sulphinic Acids, Esters and Their Derivatives", ed. by S. Patai, John Wiley and Sons, 1990, New York, S. 187f

[7] "VIII. Reductions of Sulfonyl Derivatives"S. Oae, in "Organic Sulfur Chemistry: Structure and Mechanism", ed. by J. T. Doi, CRC Press, Inc., Boca Raton, 1991, S. 334f

[8] "Sodium p-Toluenesulfinate"F. C. Whitmore, F. H. Hamilton, in "Organic Syntheses", Coll. Vol. I, ed by H. Gilman, 2nd ed., John Wiley and Sons, New York,1956

[9] "Lithium Aluminium Hydride Reduction of Certain Sulfonic Acid Derivatives"L. Field, F. A. GrunwaldJ. Org. Chem. 16,946-953 (1951)

[10] "Development and Characterization of Crosslinked Ionomer Membranes Based Upon Sulfinated and Sulfonated PSU. 1. Crosslinked PSU Blend Membranes By Disproportionation of Sulfinic Acid Groups."Jochen Kerres, Wei Cui, Ralf Disson, Wolfgang NeubrandJ. Memb. Sci. 139,211-225 (1998)


## Patentansprüche

1. Verfahren zur Darstellung von polymeren Sulfinaten P-$(SO_2)_nX$, (X=1-(n=1), 2-(n=2) oder 3-(n=3) wertiges Metallkation oder H+ oder Ammoniumion $NR_4^+$ mit R=Alkyl, Aryl, H) **dadurch gekennzeichnet, dass** ein $SO_2Y$-Gruppen (Y=F, Cl, Br, I, OR, $NR_2$ (R=Alkyl und/oder Aryl und/oder H), N-Imidazolyl, N-Pyrazolyl) enthaltendes Polymer in einem geeigneten organischen Lösungsmittel oder in Wasser aufgelöst oder suspendiert wird, das Reduktionsmittel in gelöster oder fester Form, verdünnt mit organischem Lösungsmittel oder Wasser, oder rein zugegeben wird, die Reduktion je nach Reduktionsmittelmenge und/oder Reduktionszeit und/oder Reduktionstemperatur komplett oder teilweise durchgeführt wird, und das entstandene, Sulfinatgruppen enthaltende Polymer durch Ausfällen in einem geeigneten Fällmittel, gegebenenfalls Hydrolyse der restlichen $SO_2Y$-Gruppen zu Sulfonatgruppen $SO_3X$ mittels wässriger oder nichtwässriger Basen- oder Säurelösung, nachfolgender Auflösung in einem dipolar-aprotischen Lösungsmittel und erneute Ausfällung in einem geeigneten Fällmittel und nachfolgende Abfiltration und Trocknung isoliert wird.

2. Verfahren nach Anspruch 1 **dadurch gekennzeichnet, dass** zur Darstellung der sulfinierten Polymere, dass $SO_2Y$-Gruppen enthaltende Polymer in Wasser aufgelöst oder suspendiert wird, das Reduktionsmittel Natriumsulfit oder Natriumdithionit oder Natriumthiosulfat in fester Form oder gelöst in Wasser zugegeben wird, die Reduktion je nach Reduktionsmittelmenge und/oder Reduktionszeit und/oder Reduktionstemperatur komplett oder teilweise durchgeführt wird.

3. Verfahren nach Anspruch 1 oder 2 **dadurch gekennzeichnet, dass** das Sulfinatgruppen enthaltende Polymer ausgewählt ist aus der Gruppe der (Het)arylhauptkettenpolymere wie z.B. Polyetherketone oder Polysulfone.

4. Verfahren nach Anspruch 1 oder 2, **dadurch gekennzeichnet, dass** als Lösungsmittel dipolar-aprotische Lösungsmittel, wie N-Methylpyrrolidon, N,N-Dimethylacetamid, NN-Dimethylformamid, Dimethylsulfoxid oder Etherlösungsmittel wie THF oder Alkohol und als Fällungsmittel Alkohole wie Methanol, Ethanol oder Propanol oder Wasser

verwendet wird.

5. Polymere erhältlich nach dem Verfahren gemäß einem der Ansprüche 1, 2 oder 4, wobei das Polymer ausgewählt ist aus der Gruppe der
Gruppe der Styrol(co)polymere,
Heteroarylhauptkettenpolymere,
Arylhauptkettenpolymere,
Polysulfone und Copolymere,
Polyethersulfone und Copolymere,
Polyarylethersulfone und Copolymere,
Polymere enthaltend das Benzimidazol Monomer, wobei die (Benz)Imidazol-Einheit in der Hauptkette oder in der Seitenkette vorhanden sein kann,
Polythiophene und Copolymere,
Polypyrrole und Copolymere,
Polyphenylene und Copolymere,
Polyphenylenether und Copolymere,
Polyphenylensulfide und Copolymere,
Poly(1,4-Phenylene) oder Poly(1,3-Phenylene) und Copolymere,
Poly (benzoxazole) und Copolymere,
Poly (benzthiazole) und Copolymere,
Polyaniline und Copolymere,
Polyazulene und Copolymere,
Polycarbazole und Copolymere,
Polypyrene und Copolymere,
Polyindophenine und copolymere,
Polyarylthioether und Copolymere,
Polyarylether und Copolymere,
Polyphenylensulfide und Copolymere,
Polyphenylenether und Copolymere,
Polyphenylenvinylene und Copolymere,
und
Poly(1,4-phenylene) oder Poly(1,3-phenylene), welche in der Seitenkette modifiziert sind mit der benzoyl, naphtoyl oder o-phenyloxy-1,4-benzoyl Gruppe,
oder der
m-phenyloxy-1,4-benzoyl Gruppe oder p-Phenyloxy-1,4-benzoyl Gruppe.

6. Polymer nach Anspruch 5 **dadurch gekennzeichnet, dass** es Sulfinatgruppen und Sulfohalogenid-Gruppen enthält, wobei die Gruppen jedes beliebige Verhältnis zueinander annehmen Können.

7. Sulfinat-Gruppen enthaltendes Polymer im Bulk oder an der Oberfläche gemäß Anspruch 5 und 6, wobei die $SO_2Y$-Gruppen vollständig oder teilweise zu Sulfinatgruppen umgesetzt wurden und die verbleibenden $SO_2Y$-Gruppen gegebenenfalls zu Sulfonat-Gruppen umgesetzt wurden.

8. Vernetzte polymere Sulfinate erhältlich durch Zugabe von Di- oder Oligohalogenalkanen oder anderen di- oder oligofunktionellen Alkylierungsmitteln wie Verbindugnen mit Tosylgruppen, Epoxygruppen zu Lösungen der Polymere gemäß Anspruch 7 in dipolaraprotischen Lösungsmitteln, wobei optional vor der Zugabe des Vernetzers zur Lösung der teilweise oder vollständig sulfinierten Polymere noch andere gegebenenfalls funktionalisierte Polymere entweder gelöst oder in reiner Form zugegeben werden.

9. Versetzte polymere Sulfinate nach Anspruch 8, **dadurch gekennzeichnet, dass** die zusätzlich zu den sulfinierten Polymeren, zugesetzten Polymere ausgewählt sind aus Kationenaustauscherpolymeren oder deren nichtionischen Vorstufen, die die Kationenaustauschergruppen $SO_3H$ und/oder $PO_3H_2$ und/oder COOH und/oder nichtionische Vorstufen der Kationenaustauschergruppen wie $SO_2Y$ und/oder $PO_2Y_2$ oder COY enthalten.

10. Vernetzte polymere Sulfinate nach den Ansprüchen 8 oder 9, **dadurch gekennzeichnet, dass** neben den di- oder oligofunktionellen Vernetzern gleichzeitig noch andere monofunktionelle Alkylierungsmittel zugesetzt werden, die gegebenenfalls weitere funktionelle Gruppen tragen können, die ausgewählt sind aus:

- saure Gruppen: COOM, PO3M2, S03M mit M=H oder beliebiges Kation;
- Vorstufen der sauren Gruppen: COY, PO2Y2, S02Y;
- Basische Gruppen wie primäre, sekundäre, tertiäre Amine, Pyridylgruppen, Imidazolylgruppen, Pyrazolylgruppen

und die gleichzeitig mit der Vernetzungsreaktion mit Sulfinatgruppen unter Alkylierung reagieren.

**11.** Verwendung der vernetzten poylmeren Sulfinate nach einem der Ansprüche 8 bis 10 zur Darstellung von Polymermembranen, Polymerblendmembranen oder Formkörpern.

**12.** Verwendung der Polymer(blend)membranen nach Anspruch 11 zur Gewinnung von Energie auf elektrochemischem Weg, als Bestandteil von Membranbrennstoffzellen (H2- oder Direktmethanol-Brennstoffzellen) bei Temperaturen von -20 bis +180°C oder deren Verwendung in elektrochemischen Zellen, in sekundären Batterien, in Elektrolysezellen, in Membrantrennprozessen wie Gastrennung, Pervaporation, Perstraktion, Umkehrosmose, Elektrodialyse oder in der Diffusionsdialyse.

**Claims**

**1.** Process for the production of polymeric sulfinates P-$(SO_2)_n$X, (X=1-(n=1), 2-(n=2) or 3-(n=3) valent metal cation or H+ or ammonium ion $NR_4^+$ (with R = alkyl, aryl, H) **characterized by** a polymer containing $SO_2$Y groups (Y = P, Cl, Br, I, OR, $NR_2$ (R= alkyl and/or aryl and/or H), N-imidazole, N-pyrazole) are dissolved or suspended in a suitable organic solvent or in water, the reducing agent is added either dissolved or as a solid, diluted with organic solvent or water or pure, the reduction is conducted depending on the reduction agent quantity and/or the reduction time and/or the reduction temperature completely or partially, and the formed polymer containing sulfinate groups are isolated by precipitation in a suitable precipitation agent, optionally remaining $SO_2$Y groups are hydrolysed to sulfonate groups $SO_3$X by means of aqueous or non-aequeous base or acid solution, followed by dissolving in a dipolar aprotic solvent and again precipitation in a suitable precipitation agent and followed by filtration and drying.

**2.** Process according to claim 1 **characterized in that** the production of the sulfinated polymers, polymers containing $SO_2$Y groups are dissolved or suspended in water, sodium sulfite or sodium dithionite or sodium thiosulfate is added as reducing agent as a solid or dissolved in water, reduction is conducted depending on the reduction agent quantity and/or reduction time and/or reduction temperature completely or partially.

**3.** Process according to claim 1 or 2 **characterized in that** the sulfinate groups containing polymer is selected from the group of (het)aryl main chain polymers e.g. polyetherketones or polysulfones.

**4.** Process according to claims 1 or 2 **characterized in that** as dipolar aprotic solvents N-methylpyrrolidinone, N,N-dimethylacetamide or N,N-dimethylformamide, dimethylsulfoxide or ether solvents such as THF or alcohol and as precipitation agents alcohol as methanol, ethanol, propanol or water are used.

**5.** Polymers obtainable by processes according claim 1, 2 or 4, wherein the polymer is selected from the group of
styrol(co)polymers,
heteroaryl main chain polymers,
aryl main chain polymers,
polysulfones and copolymers,
polyethersulfones and copolymers,
polyarylethersulfones and copolymers,
polymers containing the benzimidazole monomer, wherein the (benz)imidazole-unit is in the main chain or the lateral chain present,
polythiophenes and copolymere,
polypyrroles and copolymers,
polyphenylenes und copolymere,
polyphenylenethers and copolymere,
polyphenylensulfides and copolymere,
poly(1,4-phenylene)s or poly(1,3-phenylene)s copolymers, poly (benzoxazole)s and copolymers,
poly (benzthiazole)s and copolymers,
polyanilines and copolymere,

polyazulenes and copolymere,
polycarbazoles and copolymere,
polypyrenes and copolymere,
polyindophenines and copolymere,
polyarylthioethers and copolymere,
polyarylethers and copolymere,
polyphenylensulfides and copolymere,
polyphenylenethers and copolymere,
polyphenylenvinylenes and copolymere,
and
poly(1,4-phenylene)s or poly(1,3-phenylene)s, which are modified in the lateral chain with a benzoyle, naphtoyle or o-phenyloxy-1,4-benzoyle group,
or a
m-phenyloxy-1,4-benzoyle group or p-phenyloxy-1,4-benzoyl group.

**6.** Polymer according to claim 5, **characterized in that** it contains sulfinate groups and sulfo halide groups, wherein the groups being able to assume any desired ratio to each other.

**7.** Sulfinate groups containing polymer in bulk or at the surface according claim 5 and 6, wherein the $SO_2Y$ groups are completely or partially converted to sulfinate groups and the remaining $SO_2Y$-groups where eventually converted into sulfonate groups.

**8.** Crosslinked polymers obtainable by addition of dihalogenoalkanes or oligohalogenoalkanes or other difunctional or oligofunctional alkylation agents, like compounds with tosyl groups, epoxy groups to the solutions of polymers according claim 7 in dipolar aprotic solvents, wherein before the crosslinkes is added to the solution of the partly or completely sulfinated polymer, still other if optionally functionalised polymers are added either dissolved or as a solid.

**9.** Crosslinked sulfinated polymers according to claim 8 **characterized in that** the added polymers, added to the sulfinated polymer, are selected from cation exchange polymers or their non-ionic precursors containing the cation exchange group $S0_3H$ and/or $P0_3H_2$ and/or COOH and/or non-ionic precursors of the cation exchange group like $S0_2Y$ and/or $PO_2Y_2$ or COY.

**10.** Crosslinked sulfinated polymers according to claims 8 to 9 **characterized in that** apart from the difunctional or oligofunctional crosslinker simultaneously still other monofunctional alkylation agents are added, which can carry, if necessary, further functional groups, whicht are selected from:

- adicic group: COOM, $PO_3M_2$, $SO_3M$ with M = H or arbitrary cation;
- precursors of the acidic groups: COY, $PO_2Y_2$, $SO_2Y$,
- basic groups like primary, secondary, tertiary amines, pyridine group, imidazole group, pyrazole group

and these react simultaneously with the cross-linking reaction with sulfinate groups by alkylation.

**11.** Use of the crosslinked polymeric sulfinates according to claim 8 to 10 for the production of polymer membranes, polymerblend membranes or molded articles.

**12.** Use of the polymer(blend)membranes according claim 11 for the generation of energy in an electrochemical way, as a constituent of membrane fuel cells (hydrogen or direct methanol fuel cells) at temperatures of-20 to +180°C, or their use in electrochemical cells, in secondary batteries, in electrolysis cells, in membrane separation processes like gas separation, pervaporation, perstraction, reverse osmosis, electrodialysis and diffusion dialysis.

**Revendications**

**1.** Procédé pour la réalisation de sulfinates polymères $P\text{-}(SO_2)_nX$, (à cation mono- X=1-(n=1), bi- 2-(n=2) ou trivalents 3-(n=3) de métal ou de H+ ou ammonium $NR_4^+$ avec R=alkyle, aryle, H), **caractérisé en ce qu'**un polymère contenant les groupements Y (Y=F, Cl, Br, I, OR, $NR_2$ (R=alkyle et/ou aryle et/ou H) de $SO_2$ n-imidazolyle, n-pyrazolyle) est dissout dans un solvant organique approprié ou mis en suspension dans de l'eau, que l'agent réducteur liquide ou solide est ajouté pur ou dissout dans un solvant organique ou dans de l'eau, que la réduction est effectuée partiellement ou intégralement en fonction de la quantité d'agent réducteur ajouté et/ou en fonction de la durée et/ou de la température de la réduction et que le polymère réalisé, comportant des groupements de sulfinates, est isolé par précipitation dans un agent de précipitation approprié, le cas échéant par hydrolyse des groupements résiduels Y de $SO_2$ en groupes de sulfonates $SO_3X$ à l'aide d'une solution alcaline ou acide aqueuse ou non-aqueuse, est ensuite dissout dans un agent solvant dipolaire aprotique et, après nouvelle précipitation dans un agent de précipitation approprié, est filtré et séché.

2. Procédé selon la revendication 1, **caractérisé en ce que** le polymère contenant les groupements Y de $SO_2$ servant à la réalisation des polymères sulfités est dissout ou mis en suspension dans de l'eau, que la agent de réduction sulfate de sodium ou dithionite de sodium ou thiosulfate de sodium est ajouté sous forme solide ou dissoute dans de l'eau et que la réduction est complète ou partielle en fonction de la quantité d'agent réducteur ajoutée et/ou en fonction de la durée et/ou de la température de la réduction.

3. Procédé selon la revendication 1, **caractérisée en ce que** le polymère contenant les groupements sulfinés provient du groupe des squelettes de polymère des (het)arlyes, par exemple de cétones de polyéther ou de polysulfones.

4. Procédé selon la revendication 1 ou 2, **caractérisé en ce que** l'agent solvant est
un solvant dipolaire aprotique, comme le N-methylpyrrolidone, le N,N-diméthylacétamide, le NN-dimethylformamide, le diméthylsulfoxyde ou un solvant à base d'éther comme le THF ou de l'alcool
et que l'agent de précipitation est un alcool comme le méthanol, l'éthanol, le propanol ou de l'eau.

5. Polymères obtenus par le procédé selon l'une des revendications 1, 2 ou 4, le polymère étant choisi du groupe des :

Polymères ou copolymères du groupe des styrènes,
Squelettes de polymères hétéroaryles,
Squelettes de polymères d'aryle
Polysulfones et copolymères,
Polyéthersulfones et copolymères,
Polyaryléthersulfones et copolymères,
Polymères contenant le monomère benzimidazole, l'unité (benz)imidazole pouvant être située dans la squelette du polymère ou dans la chaîne du copolymère,
Polythiophènes et copolymères,
Polypyrroles et copolymères,
Polyphénylènes et copolymères,
Ethers de polyphényle et copolymères,
Sulfures de polyphénylène et copolymères,
Poly(1,4-phénylènes) ou poly(1,3-phénylènes) et copolymères,
Poly (benzoxazoles) et copolymère,
Poly (benzthiazoles) et copolymères,
Polyanilines et copolymères,
Polyazulènes et copolymères,
Polycarbazoles et copolymères,
Polypyrènes et copolymères,
Polyindophénines et copolymères,
Polyarylthioéthers et copolymères,
Polyaryléthers et copolymeres,
Sulfures de polyphénylène et copolymères,
Ethers de polyphényle et copolymères,
Vinylènes de polyphényle et copolymères,
et
Poly(1,4-phénylènes) ou poly(1,3-phénylènes) dont la chaîne de copolymère est modifiée à l'aide du groupement des benzoyles, naphtoyles ou des o-phényloxy-1,4-benzoyles,
ou bien
du groupement m-phényloxy-1,4-benzoyle ou de p-phényloxy-1,4-benzoyle.

6. Polymère selon la revendication 5, **caractérisé en ce qu'**il contient des groupes sulfinate et les groupes sulfohalogénure, lesquels groupes peuvent prendre n'importe quel rapport à l'autre.

**7.** Polymères contenant, selon la revendication 5 et 6, dans la masse ou à la surface des groupements de sulfinates dont les groupes Y de $SO_2$ ont partiellement ou intégralement été transformés en groupes de sulfinates et dont les groupes Y résiduels de $SO_2$ ont, le cas échéant, été transformés en groupes de sulfonates.

**8.** Sulfinates polymères réticulés obtenus par addition d'alcanes di- ou oligohalogeniques ou d'autres agents d'alcylisation di- ou oligofonctionels, comme les combinaisons avec des groupements de tosyle ou d'epoxydes pour la dissolution des polymères dans des solvants dipolaires-aprotiques, selon la revendication 7, pour lesquels encore d'autres polymères, le cas échéant des polymères fonctionnalisés, sont en option ajoutés purs ou dissouts, avant l'ajout de l'agent de réticulation, à la solution des polymères partiellement ou intégralement sulfinés.

**9.** Sulfinates polymères réticulés selon la revendication 8, **caractérisés en ce que** les polymères ajoutés en complément aux polymères sulfinés ont été choisis dans des polymères à échangeurs de cations ou dans leurs stades non-ioniques préliminaires, contenant des groupes d'échangeurs de cations $SO_3H$ et/ou $PO_3H_2$ et/ou COOH et/ou des stades antérieurs non-ioniques d'échangeurs de cations comme le $SO_2Y$ et/ou le $PO_2Y_2$ ou du COY.

**10.** Sulfinates polymères réticulés selon les revendications 8 ou 9, **caractérisés en ce que** d'autres agents monofonctionnels d'alkylation sont ajoutés en complément aux agents oligofonctionnels de réticulation, susceptibles de contenir le cas échéant d'autres groupes fonctionnels, parmi :

- des groupes acides: COOM, P03M2, SO3M avec M=H ou un quelconque cation;
- Stades préliminaires de groupes acide : COY, PO2Y2, SO2Y;
- Groupements basiques comme les aminées primaires, secondaires ou tertiaires, les groupements de pyridyle, d'imidazolyle, de pyrazolyle

agissant par alkylation au moment de la réaction de réticulation avec les groupements de sufinates.

**11.** Utilisation des sulfinates polymères réticulés selon l'une des revendications 8 à 10 pour la réalisation de membranes polymères, de membranes échangeuses d'ions ou de corps moulés.

**12.** Utilisation de membranes polymères échangeuse d'ions selon revendication 11 pour la génération électrochimique d'énergie, comme composant de pile à combustible à membrane (pile à combustible H2 ou à méthanol direct) à des températures de -20 à +180°C ou leur utilisation dans des cellules électrochimiques, dans les batteries secondaires, dans des cellules d'électrolyse, dans les procédés de séparation à membrane comme la séparation des gaz, la pervaporation, la perstraction, l'osmose inverse, l'électrodialyse ou la dialyse par diffusion.

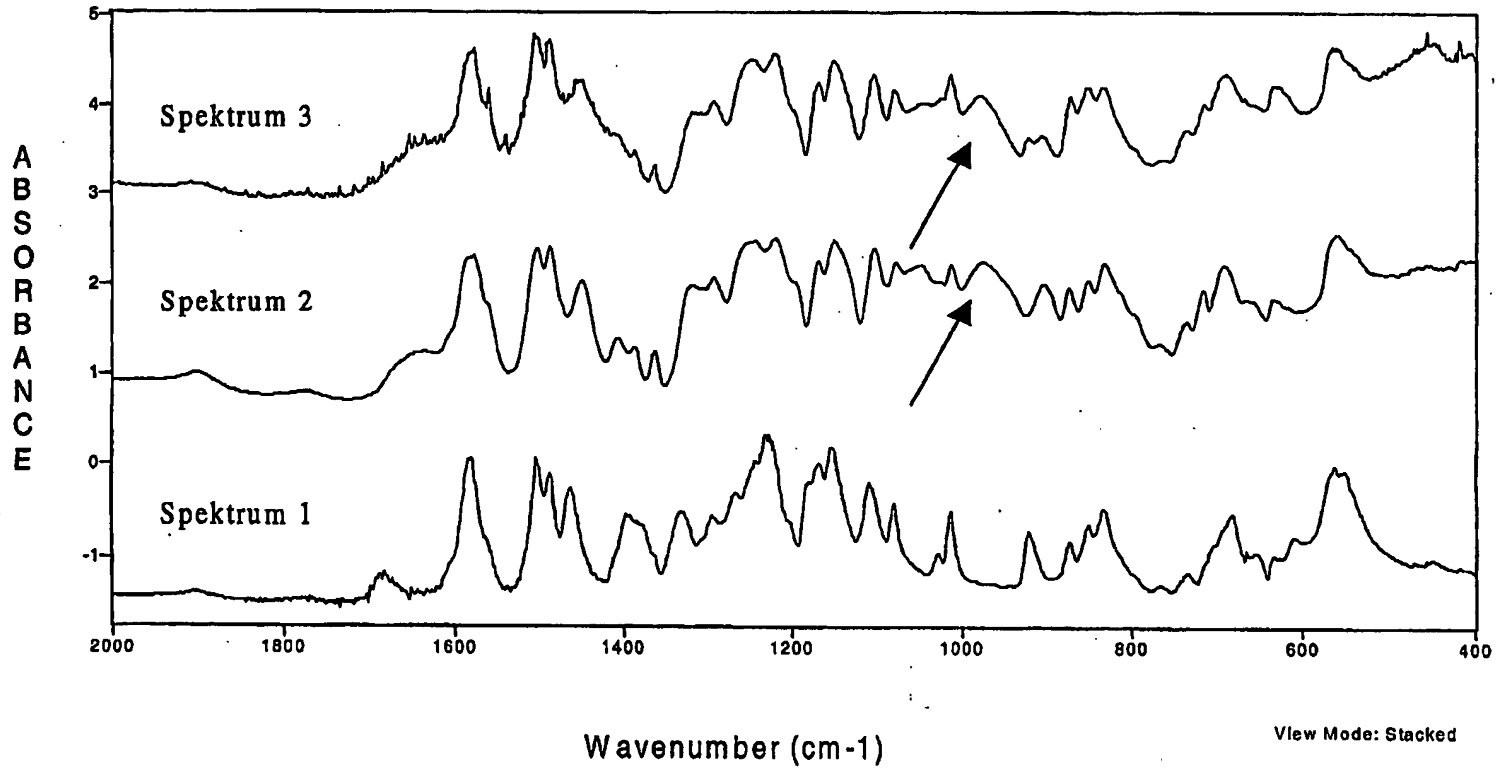


Abb. 1: IR-Spektren von PSU-$SO_2Cl$ (Spektrum 1), von PSU-$SO_2Li$, hergestellt durch Reaktion von PSU-Li mit $SO_2$ (Spektrum 2), und von PSU-$SO_2Li$, hergestellt durch Reduktion von PSU-$SO_2Cl$ mit $LiAlH_4$ (Spektrum 3)

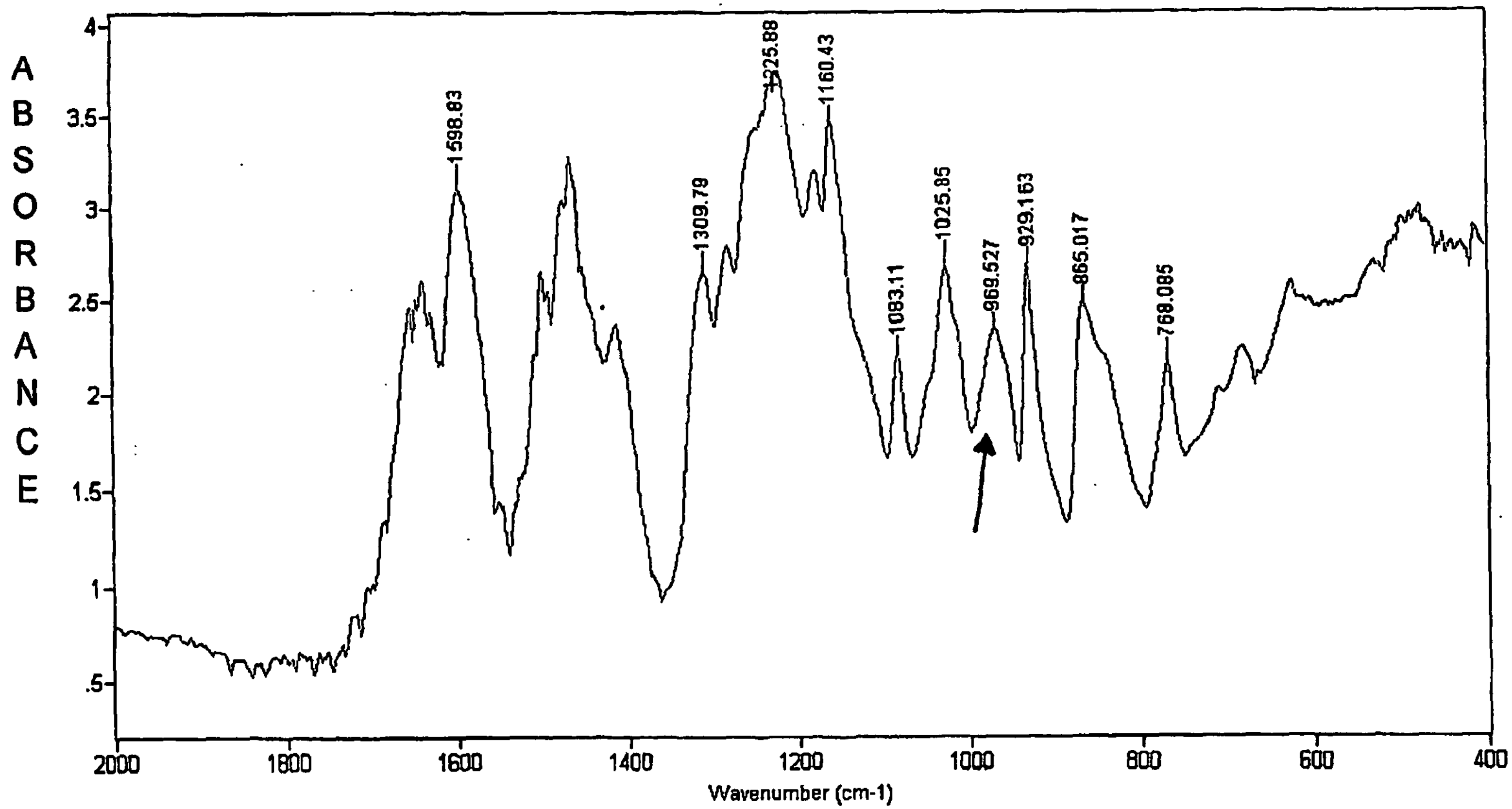


Abb. 2 FTIR-Spektrum des sulfinierten PEEK (Pfeil: Sulfinatbande)

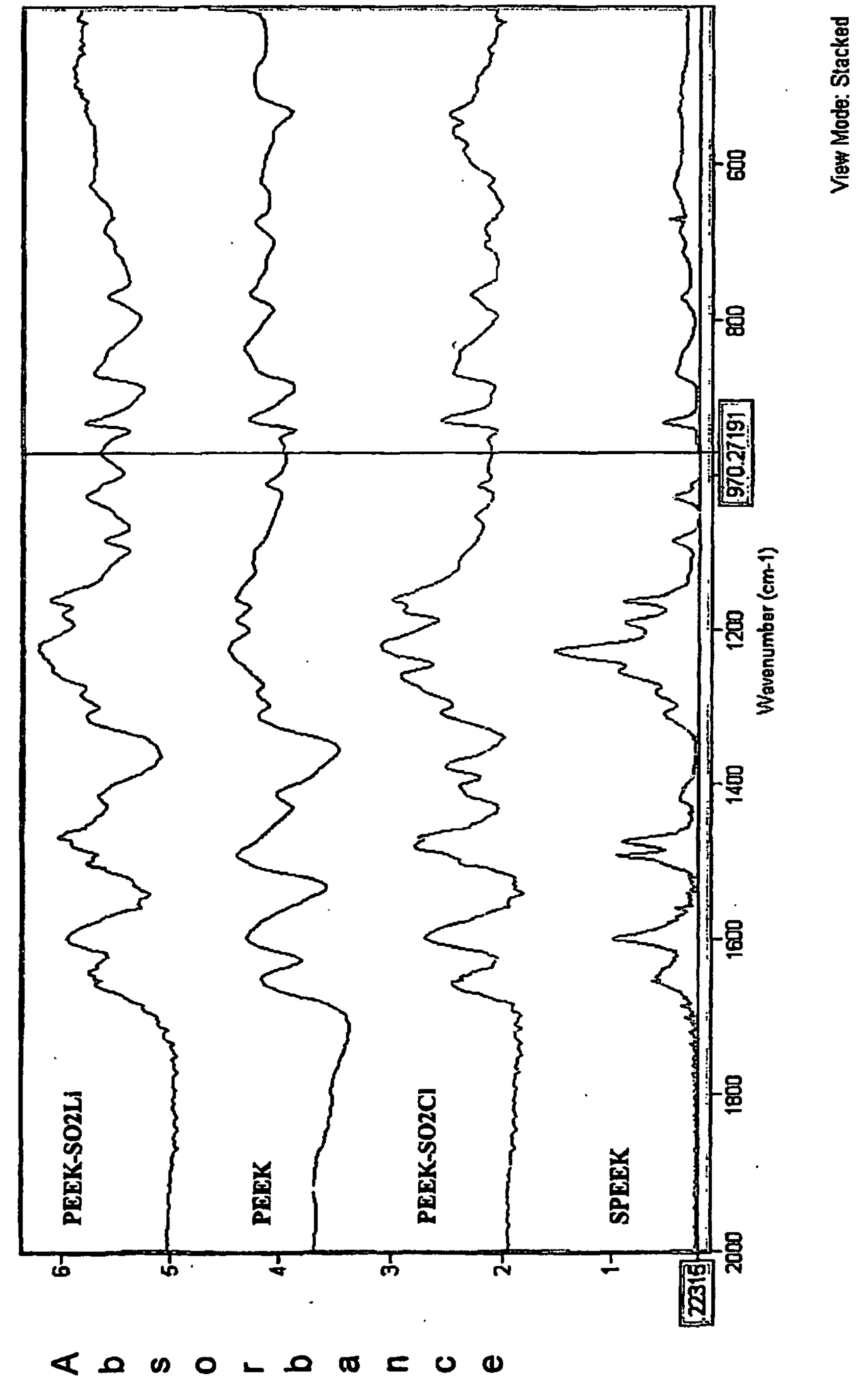


Abb. 3: Vergleich der IR-Spektren der verschiedenen PEEK-Sulfoderivate

# PEEK-$SO_2Li$

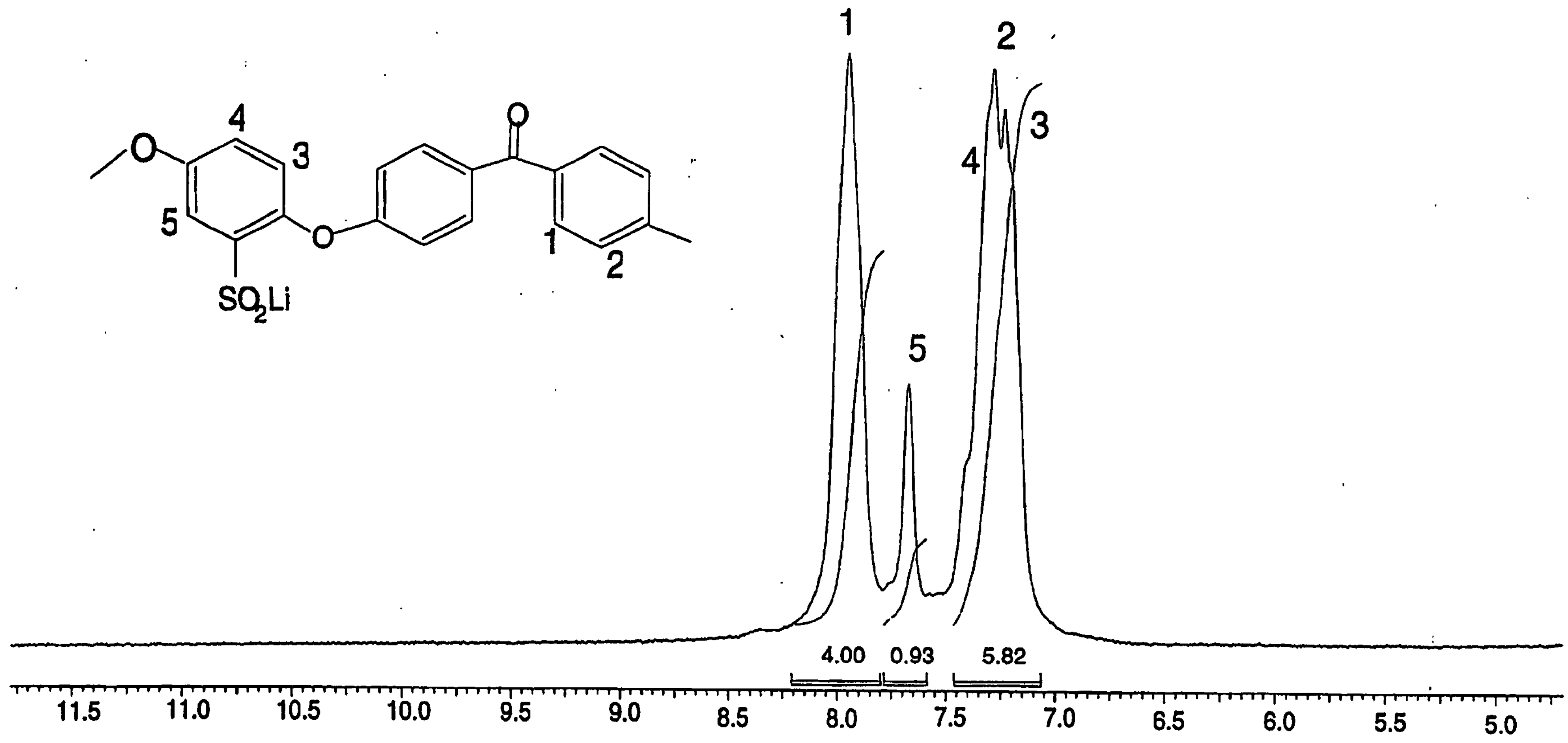


Abb. 4: $^1$H-NMR-Spektrum des sulfinierten PEEK (Signale 2,3,4 entsprechen 6 Protonen, Signal 1 entspricht 4 Protonen, 5 entspricht 1 Proton, was eine Summe von 11 Protonen ergibt. 1 Proton wurde somit substituiert.

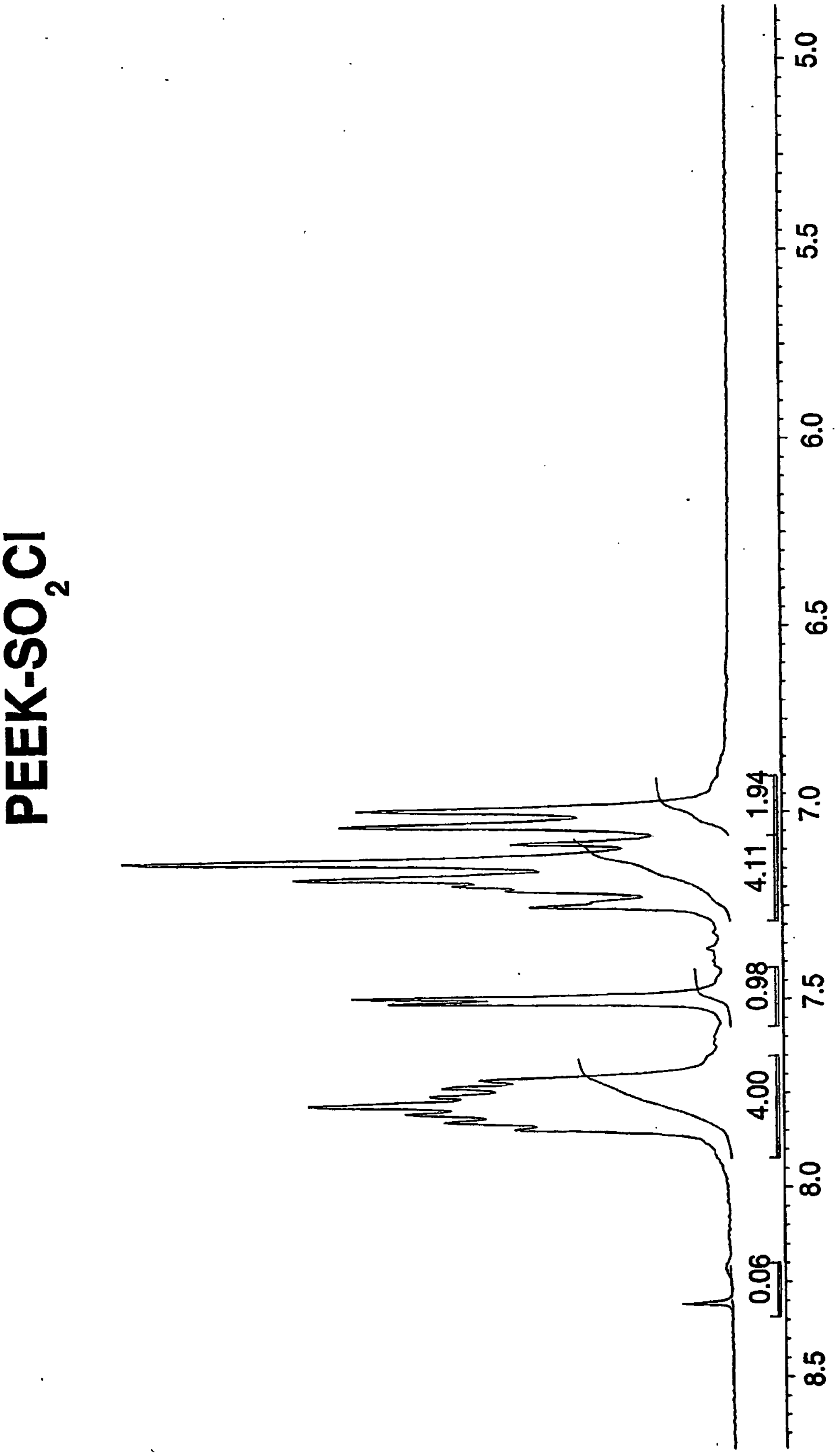


Abb. 5: $^1$H-NMR-Spektrum des Ausgangspolymers PEEK-$SO_2$Cl

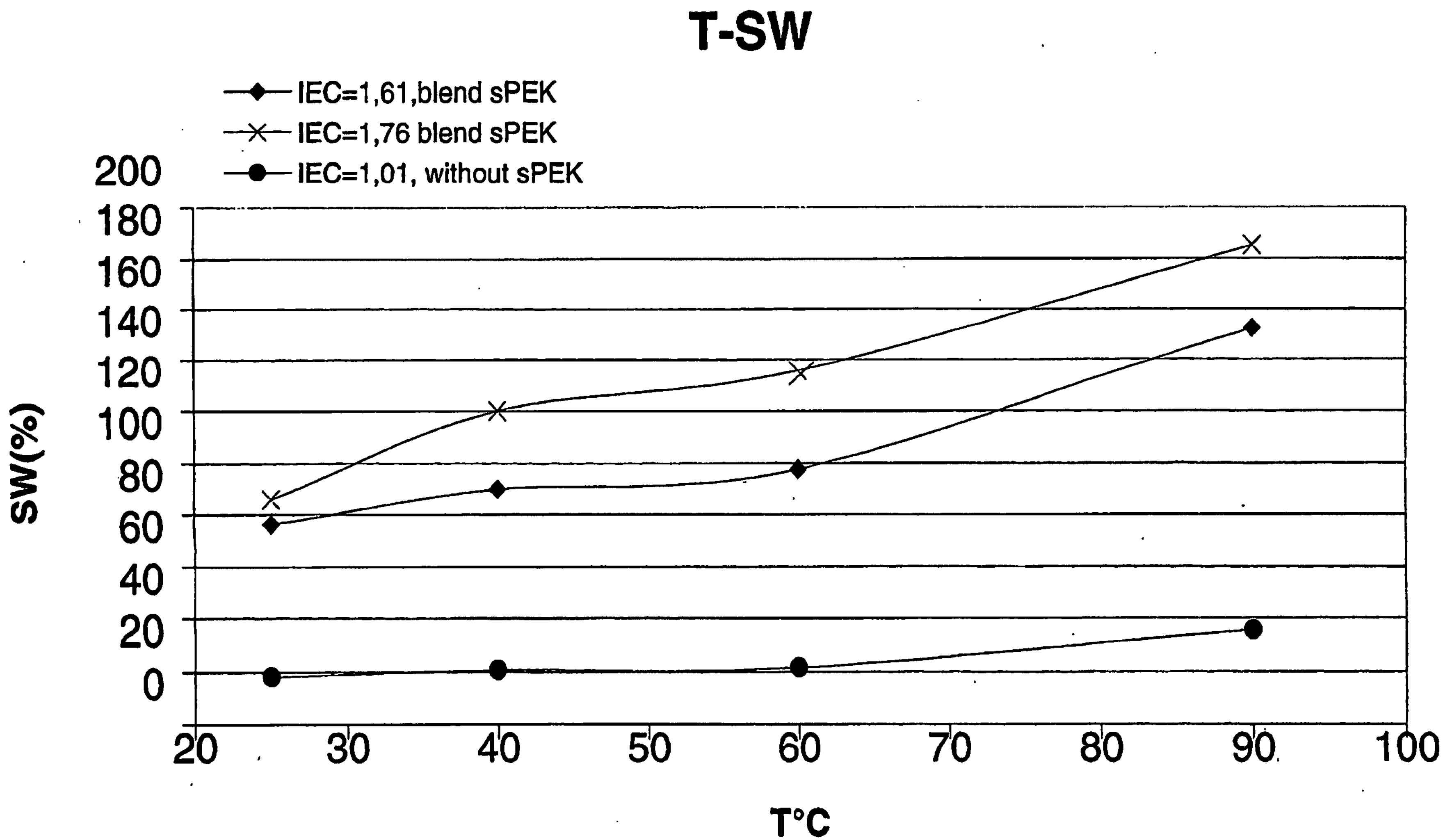


Abb. 6: Abhängigkeit der Wasseraufnahme der Membranen von der Temperatur

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19622337, J. Kerres, W. Cui, W. Schnurnberger
- FR F9706706, J. Kerres, W. Cui, W. Schnurnberger
- US 6221923 B, J. Kerres, W. Cui, W. Schnurnberger
- US 4999415 A, M. D. Guiver, O. Kutowy
- DE 3636854 A1, M. D. Guiver, O. Kutowy, J. W. Ap-Simon


### In der Beschreibung aufgeführte Nicht-Patentliteratur


- **JOCHEN KERRES ; WEI CUI ; MARTIN JUNGINGER.** Development and Characterization of Crosslinked Ionomer Membranes Based Upon Sulfinated and Sulfonated PSU. 2. Crosslinked PSU Blend Membranes By Alkylation of Sulfinate Groups With Dihalogenoalkanes. *J. Memb. Sci.,* 1998, vol. 139, 227-241
- **J. KERRES ; W. ZHANG ; W. CUI.** New sulfonated engineering polymers via the metalation route. 2. Sulfinated-Sulfonated Poly(ethersulfone) PSU Udel® and Its Crosslinking. *J. Polym. Sci.: Part A: Polym. Chem.,* 1998, vol. 36, 1441-1448
- Syntheses of sulfinic acids. **URI ZOLLER.** The Chemistry of Sulphinic Acids, Esters and Their Derivatives. John Wiley and Sons, 1990, 187f
- VIII. Reductions of Sulfonyl Derivatives. **S. OAE.** Organic Sulfur Chemistry: Structure and Mechanism. CRC Press, Inc, 1991, 334f
- Sodium p-Toluenesulfinate. **F. C. WHITMORE ; F. H. HAMILTON.** Organic Syntheses. John Wiley and Sons, 1956, vol. I
- **L. FIELD ; F. A. GRUNWALD.** Lithium Aluminium Hydride Reduction of Certain Sulfonic Acid Derivatives. *J. Org. Chem.,* 1951, vol. 16, 946-953
- **JOCHEN KERRES ; WEI CUI.** Development and Characterization of Crosslinked Ionomer Membranes Based Upon Sulfinated and Sulfonated PSU. 1. Crosslinked PSU Blend Membranes By Disproportionation of Sulfinic Acid Groups. *J. Memb. Sci.,* 1998, vol. 139, 211-225
- **JOCHEN KERRES ; WEI CUI ; RALF DISSON ; WOLFGANG NEUBRAND.** Development and Characterization of Crosslinked Ionomer Membranes Based Upon Sulfinated and Sulfonated PSU. 1. Crosslinked PSU Blend Membranes By Disproportionation of Sulfinic Acid Groups. *J. Memb. Sci.,* 1998, vol. 139, 211-225